# FASCICULE DE BREVET EUROPEEN

(11) **EP 1 957 854 B1**
(45) Date de publication et mention de la délivrance du brevet: **04.01.2012**
(21) Numéro de dépôt: 06819856.3
(22) Date de dépôt: 30.11.2006
(51) Int. Cl.: F16L 59/147

(54) **ELEMENT D'ISOLATION POUR CONDUITE DE TRANSPORT DE GAZ CHAUDS ET PROCEDE DE REALISATION D'UNE TELLE CONDUITE**
ISOLIERELEMENT FÜR EIN ROHR ZUR BEFÖRDERUNG VON HEISSEN GASEN UND VERFAHREN ZUR IMPLEMENTIERUNG SOLCH EINES ROHRS
INSULATING ELEMENT FOR A PIPE FOR TRANSPORTING HOT GASES, AND METHOD OF IMPLEMENTING SUCH A PIPE

(30) Priorité: 05.12.2005 FR 0553723
(43) Date de publication de la demande: 20.08.2008
(73) Titulaire: Commissariat à l'Énergie Atomique et aux Énergies Alternatives, 75015 Paris (FR)
(72) Inventeur: CACHON, Lionel, F-04100 Manosque (FR); DECHELETTE, Franck, F-13090 Aix En Provence (FR); DELASALLE, Fabrice, F-13490 Jouques (FR)
(74) Mandataire: Ilgart, Jean-Christophe
(86) Numéro de dépôt international: PCT/EP2006/069089
(87) Numéro de publication internationale: WO 2007/065835

(56) Documents cités:
- DE-A1- 4 107 539
- DE-C1- 4 431 954
- US-A- 3 885 595
- US-A- 5 697 215

## Description

### DOMAINE TECHNIQUE

La présente invention se rapporte au transport, notamment de gaz chauds utilisés par exemple comme fluide caloporteur.

La présente invention s'applique au domaine des protections thermiques des structures métalliques utilisées dans de nombreux domaines (aéronautique, génie chimique, nucléaire...). De telles protections thermiques trouvent une application dans les réacteurs nucléaires développés dans le cadre des nouvelles conceptions de réacteurs dits de quatrième génération.

Plus particulièrement, le dispositif selon l'invention est conçu pour les installations fonctionnant dans le domaine des hautes températures, c'est-à-dire pour les réacteurs HTR (« High Temperature Reactors ») dans lesquels la température du fluide de refroidissement en sortie de réacteur est supérieure à 800°C ; de préférence, il s'agit de réacteurs à caloporteur gazeux (RCG) fonctionnant avec un flux neutronique rapide refroidi par un gaz.

### ÉTAT DE LA TECHNIQUE ANTÉRIEURE

De nombreux procédés produisent (génie chimique en particulier) ou utilisent en tant que fluide caloporteur (réacteurs nucléaires en particulier) des gaz sous pression à haute température.

La température du gaz peut atteindre 1000°C, à une pression de 100 bars.

Le confinement et le transport d'un gaz sous pression à haute température dans des tuyauteries sont susceptibles de générer des contraintes inadmissibles dans les tuyauteries.

En effet, à l'heure actuelle aucun des matériaux répertoriés dans les codes de dimensionnement n'est prévu pour fonctionner de manière sûre à un tel niveau de chargement (c'est-à-dire une telle pression combinée avec ce niveau de température). Par conséquent, il apparaît nécessaire d'abaisser la température de structure de la tuyauterie, corrélativement au niveau de pression pour se ramener à des conditions de dimensionnement admissibles définies par les codes de dimensionnement.

Il est alors prévu, de manière conventionnelle, d'utiliser un dispositif de protection thermique capable d'absorber un gradient thermique supérieur à 800°C sur son épaisseur afin de maintenir la structure à température admissible. Les solutions techniques permettant de résoudre ce problème peuvent être classées en deux grandes familles :
- la première consiste en un refroidissement actif de la structure externe de la tuyauterie par un fluide. Cette technique est efficace. Cependant elle présente deux inconvénients. D'une part, il s'agit d'une solution lourde et coûteuse nécessitant de placer une installation auxiliaire de refroidissement, et d'autre part, l'installation d'un tel dispositif entraîne un refroidissement significatif du gaz à véhiculer.

Or, dans le cas où l'on souhaite récupérer la chaleur du fluide transporté pour produire de l'énergie, comme c'est le cas dans une centrale électrique par exemple, ce refroidissement est très pénalisant.
- La deuxième technique consiste en la mise en place d'un isolant thermique entre le gaz chaud et la structure. Cet isolant formant une barrière thermique est non étanche et c'est son aptitude à rendre le gaz immobile dans son épaisseur qui assure son efficacité.

Cette technique est très efficace et peut être mise en oeuvre de différentes manières.

Il existe essentiellement trois types différents de calorifuges :
- les calorifuges métalliques : un empilement formé d'une succession de fines tôles métalliques espacées d'une distance susceptible d'éviter les phénomènes de convection est utilisé comme protection anti-rayonnement.

Comme protection contre les phénomènes convectifs, il existe des structures stratifiées composées de couches de grillages métalliques à maille fine d'un fil de 0,2 mm et de fines feuilles métalliques (type Métallisol®). Pour atteindre de bonnes performances d'isolation, ce type de barrière thermique doit être de grande taille et est donc encombrante. Son encombrement limite son utilisation à des composants de grande taille.
- Les isolants céramiques solides, auto structurant, à l'intérieur de la tuyauterie, permettent de protéger la surface métallique externe de la température du gaz, avec notamment l'action de la convection naturelle. Ce type d'isolant thermique est connu du document EP0000497. Il est couramment utilisé dans des applications telles que les fours, cependant il ne présente pas une bonne tenue face à des gradients de pression ou de température qui pourraient s'instaurer dans l'isolant solide. Un vieillissement rapide par fissuration de l'isolant est donc à craindre dans des applications du type Réacteur à Caloporteur Gaz (RCG), où peuvent apparaître les problèmes liés à des vibrations ou des dépressurisations rapides de la tuyauterie. D'autre part, la plupart de ces céramiques solides et poreuses ne résistent pas à l'érosion à vitesse élevée (>20m/s). Elles nécessitent un traitement de vitrification de la face en contact avec le gaz en circulation, qui rendra cette même face plus fragile aux gradients thermiques.
- Les isolants fibreux placés à l'intérieur de la tuyauterie. Cet isolant n'ayant aucune tenue mécanique, est généralement contenu dans une structure, de type chemise pour les tuyauteries, qui devra le protéger de la circulation du fluide.

Pour une application aux RCG, les isolants fibreux apparaissent comme les plus performants.

Comme écrit précédemment, les isolants fibreux sont enfermés entre la chemise et la structure pour les isoler des gaz. Une liaison mécanique est à prévoir afin de lier la chemise et la structure.

Il est alors recherché des solutions techniques de chemises liées à la structure aptes à supporter des dilatations différentielles entre la chemise interne chaude et la tuyauterie externe qui reste à une température modérée, et à permettre à la chemise interne à la température du gaz de résister à des variations rapides de pression.

Deux zones sont particulièrement sensibles aux contraintes évoquées ci-dessus :
- la zone de transition entre deux éléments de tuyauterie,
- la liaison entre la chemise et la tuyauterie.

Ces zones de transition permettent de compenser la dilatation différentielle des structures

Le document DE 37 20 714 décrit l'utilisation d'une pièce rapportée formant l'interface entre deux éléments de tuyauterie, l'extrémité des éléments ayant une section en escalier permettant un emboîtement d'une extrémité d'un élément dans une extrémité d'un autre élément. Ce document décrit également un emboîtement au moyen de forme conique

Les documents NL56141 et GB 2 159 598, décrivent également des interfaces de forme conique.

Les éléments décrits ci-dessus sont formés par une enveloppe rigide. Ainsi, dans le cas d'un isolant thermique destiné à absorber un gradient thermique d'environ 800°C, elle présente une contrainte thermique trop élevée, ainsi que de grandes déformations reportées sur la chemise interne guidant le fluide. La chemise est alors soumise à des contraintes très importantes, susceptibles de l'endommager.

Le document US 2 419 278 propose la mise en oeuvre de soufflets annulaire raccordant les extrémités longitudinales de la chemise interne et de l'enveloppe extérieure. Ces soufflets sont destinés à absorber les dilations pouvant intervenir, notamment entre la chemise et l'enveloppe extérieure. D'une part la fabrication de tel élément est relativement complexe. D'autre part, l'interface entre deux éléments de tuyauterie est difficile à réaliser.

Le document DE 33 36 465 propose d'intégrer à la tuyauterie des éléments déformables, ces éléments ont la forme de «V» soudés entre la tuyauterie externe et la chemise interne. En outre, il est également prévu des soufflets axiaux dans la chemise. La différence de dilatation entre l'intérieur et l'extérieur est compensée par ces formes adaptées. Pour ne pas trop perturber l'écoulement, une deuxième chemise est placée en contact direct avec le gaz. Cette solution, outre sa complexité, présente le principal inconvénient d'être difficile à mettre en oeuvre. Les fibres contenues dans les éléments de tuyauteries ainsi réalisés sont en partie apparentes au niveau des zones de raccordement entre les éléments, avant l'assemblage des éléments et des soufflets. Les fibres peuvent donc sortir de leur logement et être gênantes lors du montage.

Il est également connu du document US 5 697 215, des tubes d'isolation thermique disposés à l'intérieur des canalisations de gaz d'échappement. Ces tubes d'isolation comportent un tube externe, un tube interne et un matériau à faible densité entre les tubes interne et externe. Les tubes interne et externe sont raccordés entre eux par des bagues souples pour fermer l'espace annulaire entre les tubes interne et externe. Une bague rigide recouvre chaque bague souple pour assurer le centrage du tube interne par rapport au tube externe. Le tube externe vient en contact avec le tuyau de gaz d'échappement, l'ensemble est donc de réalisation complexe.

Le document US 3 885 595 décrit une canalisation de transport de liquide cryogénique, formé par un tube externe et un tube externe, entre lesquels est disposé un matériau d'isolation thermique. Un connecteur mâle et un connecteur femelle sont prévus chacun à une extrémité. Un soufflet de dilatation thermique est prévu au niveau du connecteur femelle. Cependant cette canalisation ne permet pas le transport de gaz, puisque les joints prévus entre les extrémités mâle et femelle permettent les fuites de gaz.

Le document DE 41 07 539 décrit une canalisation pour conduite d'échappement comportant un tube interne et un tube externe, entre lesquels est disposé un matériau isolant thermique. Les tubes interne et externe sont en contact par leurs extrémités et peuvent glisser l'un sur l'autre en cas de dilatation thermique. Cependant la réalisation de canalisation de grande longueur n'est pas aisée, puisqu'il n'est pas prévu d'assembler plusieurs modules de canalisation, aucun moyen de connexion entre des modules de canalisation n'étant prévu.

Le but de la présente invention est donc d'offrir un élément de tuyauterie pour le transport de fluides chauds comportant une structure d'isolation thermique permettant un assemblage facilité d'au moins deux éléments et enveloppant totalement la fibre, d'absorber les dilatations différentielles entre la partie la plus chaude (la chemise) et la partie froide (la structure de la tuyauterie) avec un gradient thermique sur l'épaisseur de l'isolant thermique pouvant atteindre 800°C et de résister à une dépressurisation rapide (jusqu'à 20 bar/s).

C'est également un but de la présente invention d'offrir une conduite pour le transport de fluide à haute température de montage simple et sûr.

### EXPOSÉ DE L'INVENTION

Les buts précédemment énoncés sont atteints par une cartouche d'isolation thermique contenant le matériau d'isolation thermique constituée de deux parties coulissantes permettant l'accommodation thermique sans contrainte, ni déformation de la chemise guidant le gaz.

L'enveloppe de la cartouche n'est pas fermée de manière rigide, pour permettre un éloignement et/ou un rapprochement de deux parties de la cartouche, qui se recouvrent en permanence de manière à encapsuler l'isolant thermique et à l'isoler des gaz, sans imposer de contrainte sur toute la cartouche.

En d'autres termes, l'élément d'isolation thermique comporte une zone tampon axiale, formée de deux surfaces en contact, qui absorbe les déformations dues à la dilatation thermique et aux chocs générés par la variation brusque de la pression du fluide transporté.

En outre, l'élément thermique comporte à une première extrémité un connecteur mâle et à une deuxième extrémité un connecteur femelle. L'assemblage d'une tuyauterie s'effectue par pénétration d'un connecteur mâle dans un connecteur femelle. Outre la facilité d'assemblage, cet assemblage par coulissement entre les connecteurs permet d'accommoder les jeux dus aux dilatations thermiques et aux contraintes mécaniques entre les éléments eux-mêmes.

Ainsi selon la présente invention, l'élément thermique comporte un premier moyen interne d'accommodation thermique et mécanique et un deuxième moyen d'accommodation thermique et mécanique entre les éléments. Cette combinaison est particulièrement avantageuse.

La présente invention est particulièrement adaptée aux conduites droites.

Selon un aspect de l'invention, il est prévu que l'élément d'isolation fasse partie intégrante de la tuyauterie, ce qui permet un assemblage simple d'un réseau de tuyauteries droites haute température sans avoir à tenir compte lors de l'assemblage de la protection thermique.

La présente invention a alors principalement pour objet un élément d'isolation thermique pour tuyauterie pour le transport de gaz à haute température comportant une enveloppe d'axe longitudinal, au moins un isolant thermique de type fibreux disposé dans ladite enveloppe, ledit isolant thermique étant encapsulé dans l'enveloppe, l'enveloppe étant formée par une enveloppe extérieure du conduit de transport de fluide et une chemise destinée à être en contact avec le fluide à transporter et comportant à une première extrémité longitudinale un connecteur mâle et à une deuxième extrémité longitudinale opposée à la première extrémité longitudinale un connecteur femelle, l'enveloppe extérieure et la chemise étant raccordées par les connecteurs mâle et femelle, ladite enveloppe comportant une zone annulaire adaptable axialement, ladite zone adaptable étant située au niveau du connecteur femelle, ladite zone adaptable comportant une première et une deuxième surfaces cylindriques se chevauchant et aptes à coulisser l'une par rapport à l'autre en cas de dilatations dudit élément d'isolation de tuyauterie.

On entend par zone adaptable dans la présente demande, une zone dont les dimensions peuvent être modifiées pour compenser une dilatation thermique et/ou une déformation mécanique due à une détente, et don apte à adapter ses dimensions aux conditions de fonctionnement de manière à éviter une rupture de la tuyauterie.

Ainsi, la réalisation d'une conduite est simplifiée par pénétration de connecteurs mâles de premiers éléments dans des connecteurs femelles de deuxièmes éléments, lesdites surfaces aptes à coulisser l'une par rapport à l'autre étant formées dans le connecteur femelle. Cette configuration avantageuse, réduit les ponts thermiques présents au raccordement des tronçons.

Ainsi l'enveloppe dans laquelle est confinée l'isolant thermique n'est pas scellée, mais sa configuration permet de contenir les fibres et de l'isoler des gaz, tout en facilitant l'adaptation de ladite enveloppe aux contraintes thermiques et aux contraintes mécaniques dues aux variations brutales de pression.

Dans un mode préféré de réalisation, le connecteur mâle comporte une première et une deuxième collerettes annulaires raccordées par une portion tubulaire, lesdites première et deuxièmes collerettes, étant fixées respectivement à une première extrémité longitudinale de la chemise par l'intermédiaire de la portion tubulaire à une première extrémité longitudinale de l'enveloppe extérieure, et les première et deuxième surfaces cylindriques du connecteur femelle faisant respectivement partie d'une première partie et d'une deuxième partie, ladite première partie étant fixée sur la chemise et ladite deuxième partie étant fixée sur l'enveloppe extérieure.

En particulier, la première partie comporte une collerette annulaire raccordée par son diamètre intérieur à la chemise au niveau d'une deuxième extrémité longitudinale de ladite chemise et à une première portion tubulaire par son diamètre extérieur, ladite première portion tubulaire formant la première surface, dans lequel la deuxième partie comporte une collerette annulaire raccordée par son diamètre extérieur à une deuxième extrémité longitudinale de l'enveloppe extérieure et à une deuxième portion tubulaire par son diamètre intérieur, ladite deuxième portion tubulaire formant la deuxième surface, lesdites première et deuxième parties étant montées de manière à ce que les première et deuxième portions tubulaires se recouvrent au moins partiellement et puissent coulisser l'une par rapport à l'autre.

La deuxième portion tubulaire de la deuxième partie du connecteur femelle peut pénétrer dans la première portion tubulaire de la première partie du connecteur femelle

La collerette de la première partie du connecteur femelle est, par exemple fixée sur la paroi périphérique de la chemise en arrière de la deuxième extrémité longitudinale de la chemise.

La première extrémité longitudinale de la chemise peut également avoir une forme, évasée afin d'éviter un décroché mécanique pour la zone de recouvrement.

De manière avantageuse, les collerettes comportent une conicité orientée de la deuxième vers la première extrémité longitudinale de la chemise.

Le connecteur mâle peut être fixé par soudage sur l'enveloppe extérieure et sur la chemise, et les première et deuxième parties du connecteur femelle peuvent être fixées par soudage sur la chemise et sur l'enveloppe extérieure respectivement.

Les connecteurs mâle et femelle sont avantageusement recouverts au moins partiellement d'un revêtement apte à réduire les frottements et l'usure entre le connecteur mâle et le connecteur femelle, type cermet Cr₃C₂-NiCr, ou zircone stabilisée à l'yttrium.

Le matériau utilisé pour fabriquer la structure interne (chemise et liaisons) des éléments d'isolation thermique selon la présente invention, est par exemple un alliage de nickel, type HR230 ou Inconel 600.

L'isolant thermique disposé entre la chemise et l'enveloppe extérieure a avantageusement une conductivité thermique inférieure à 0,3 w/m/°C.

Cet isolant thermique peut comprendre un feutre et/ou une laine en silicate alcalino-terreux, et/ou un feutre graphite et au moins un grillage.

De manière avantageuse, l'isolant thermique comporte des premiers tubes en grillage de plus grand maillage et un deuxième tube en grillage de plus petit maillage, ces premiers tubes pouvant être fixés. Leur déplacement axial est limité par les connecteurs mâle et femelle.

Les premiers tubes ont, par exemple des mailles de 10 mm de côté réalisées avec un fil de 2 mm de diamètre et le deuxième tube a des mailles de 0,5 mm de côté réalisées avec un fil de 0,3 mm de diamètre.

La présente invention a également pour objet un conduit de transport de fluide pour former des circuits de tuyauteries permettant d'assurer le passage d'un gaz à haute température et en pression, comportant une succession d'éléments d'isolation thermique selon la présente invention.

L'assemblage de ces éléments d'isolation thermique selon la présente invention comporte des moyens de fixation à un autre élément d'isolation thermique selon la présente invention, par bridage ou par soudage.

La présente invention a également pour objet un procédé de fabrication d'un élément de conduite selon la présente invention, comportant les étapes :
a) de fabrication d'un premier sous-ensemble comportant la chemise, le connecteur mâle et la première partie du connecteur femelle et de fabrication de la deuxième partie du connecteur femelle,
b) de mises en place de tubes en grillages autour de la chemise,
c) de fixation dudit premier sous-ensemble sur l'enveloppe extérieure,
d) de mise en place d'un matériau d'isolation thermique entre la chemise et l'enveloppe extérieure,
e) de fixation de la deuxième partie du connecteur femelle sur l'enveloppe extérieure.

Il est peut être prévu lors de l'étape a), la réalisation du sous-ensemble et de la deuxième partie du connecteur femelle par formage et soudage.

La présente invention a également pour objet un procédé de fabrication d'une conduite à l'aide des éléments de conduite selon la présente invention, comportant :
f) l'étape d'insertion d'un connecteur mâle d'un élément dans un connecteur femelle d'un autre élément,
g) de solidarisation des deux éléments par bridage ou soudage,
h) de répétition des étapes f), g) jusqu'à atteindre la longueur de conduite désirée.

### BRÈVE DESCRIPTION DES DESSINS

Les caractéristiques et avantages de l'invention seront mieux compris à la lecture de la description qui va suivre et en référence aux dessins annexés, donnés à titre illustratif et nullement limitatifs.
- La figure 1 est une vue en coupe longitudinale d'une conduite selon un exemple de réalisation de la présente invention,
- la figure 2A est une vue de détail de deux éléments d'isolation thermique pour former une conduite selon un autre exemple de réalisation,
- la figure 2B est une vue de deux éléments d'isolation thermique selon la présente invention pour former la conduite de la figure 1,
- les figures 3A et 3B sont des vues en coupe d'un connecteur mâle d'un élément d'isolation selon la présente invention,
- les figures 4A, 4B et 5 sont des vues en coupe d'un connecteur femelle porté par un élément selon la présente invention,
- la figure 6 est une vue agrandie de la figure 1,
- la figure 7 représente les résultats de la simulation thermique effectuée sur une conduite selon la présente invention,
- la figure 8 représente la déformation simulée d'une conduite selon la présente invention.

### EXPOSÉ DÉTAILLÉ DE MODES DE RÉALISATION PARTICULIERS

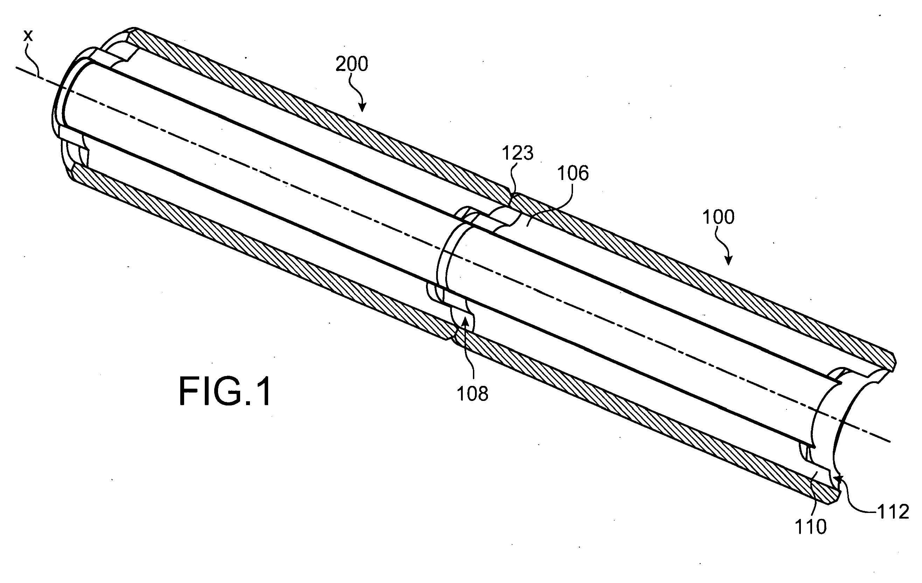

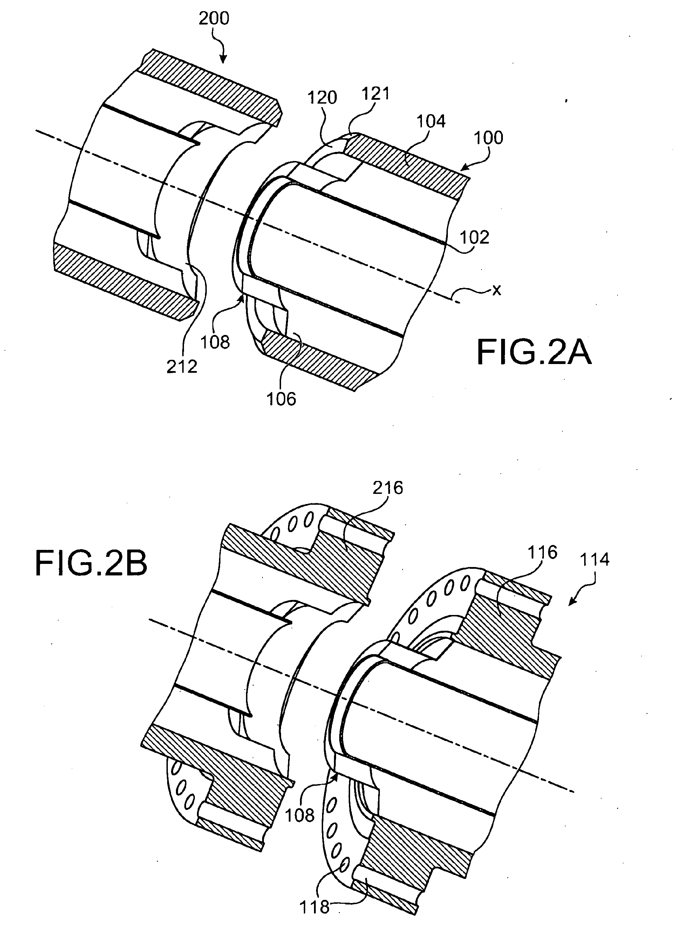

Sur les figures 1, 2A et 2B, on peut voir une partie d'une conduite pour le transport de fluide selon la présente invention comportant un premier 100 et un deuxième 200 élément d'isolation thermique selon la présente invention.

La description qui va suivre, va porter plus particulièrement sur un élément d'isolation thermique fabriqué d'une seule pièce avec la conduite, c'est-à-dire que le tube extérieur de la conduite forme l'enveloppe extérieure de l'élément d'isolation, et la chemise destinée à être en contact avec le fluide à transporter, forme l'enveloppe intérieure de l'élément d'isolation thermique. Ainsi l'élément d'isolation thermique et l'élément de conduite sont, dans ce cas, confondus.

Cependant, un élément d'isolation thermique réalisé de manière séparée par rapport à l'enveloppe extérieure de la conduite et à la chemise ne sort pas du cadre de la présente invention. Cet élément sera alors rapporté dans la conduite et fixé à celle-ci.

Les éléments 100, 200 étant identiques, nous nous attacherons plus particulièrement à décrire l'élément 100. L'élément 100 comporte une enveloppe intérieure ou chemise 102 en forme de cylindre de révolution d'axe X, destinée à être en contact avec le fluide à transporter et une enveloppe extérieure 104 ou tuyauterie externe également de révolution coaxiale à la chemise 102, destinée à être en contact avec l'environnement extérieur.

Les éléments présentent avantageusement une symétrie de révolution autour de l'axe X.

Dans un exemple préféré de réalisation, l'élément d'isolation thermique comporte à une première extrémité longitudinale 106 un connecteur mâle 108 et à une deuxième extrémité longitudinale 110 un connecteur femelle 112.

Le connecteur mâle 108 est apte à pénétrer dans un connecteur femelle 212 de l'élément 200, de manière à former une portion de conduite.

La chemise 102, l'enveloppe extérieure 104, et les connecteurs mâle 108 et femelle 112 délimitent un espace pour contenir un isolant thermique, par exemple de type fibreux. Cet espace permet d'encapsuler l'isolant thermique de manière à assurer sa tenue et à l'isoler de l'environnement extérieur, notamment des gaz chauds, pour éviter sa détérioration.

L'élément 100 comporte également des moyens de solidarisation 114 à un élément amont et à un élément aval dans le sens de la flèche F.

Sur la figure 2A, on peut voir un exemple de fixation de deux éléments de conduite selon l'invention, dans lequel la solidarisation se fait par soudage.

Les extrémités longitudinales de l'enveloppe extérieure comporte une surface annulaire 120, sensiblement orthogonale à l'axe X entourée par un chanfrein extérieur 121. Ainsi lorsqu'une première extrémité 106 d'un premier élément 100 est mise en contact avec une deuxième extrémité 210 d'un deuxième élément 200, une gorge 123 de section sensiblement triangulaire est délimitée pour recevoir le cordon de soudure.

Sur la figure 2B, on peut voir un autre exemple de réalisation de ces moyens de solidarisation 114. Les moyens 114 sont formés par des brides 116 en saillie des première et deuxième extrémités longitudinales de l'enveloppe extérieure 104.

Les brides 116 comportent des alésages 118 répartis régulièrement tout autour de l'axe X. Les alésages 118 portés par une bride 116 d'un élément 100 viennent en regard d'un alésage d'une bride 216 d'un autre élément 200 lors du rapprochement des deux éléments 100, 200 pour permettre à un moyen de bridage, par exemple un boulon (non représenté) de traverser les deux alésages et de maintenir l'un contre l'autre les deux brides par coopération avec un écrou.

Nous allons maintenant décrire en détail les connecteurs mâles 108 et femelles 112 d'un élément selon la présente invention.

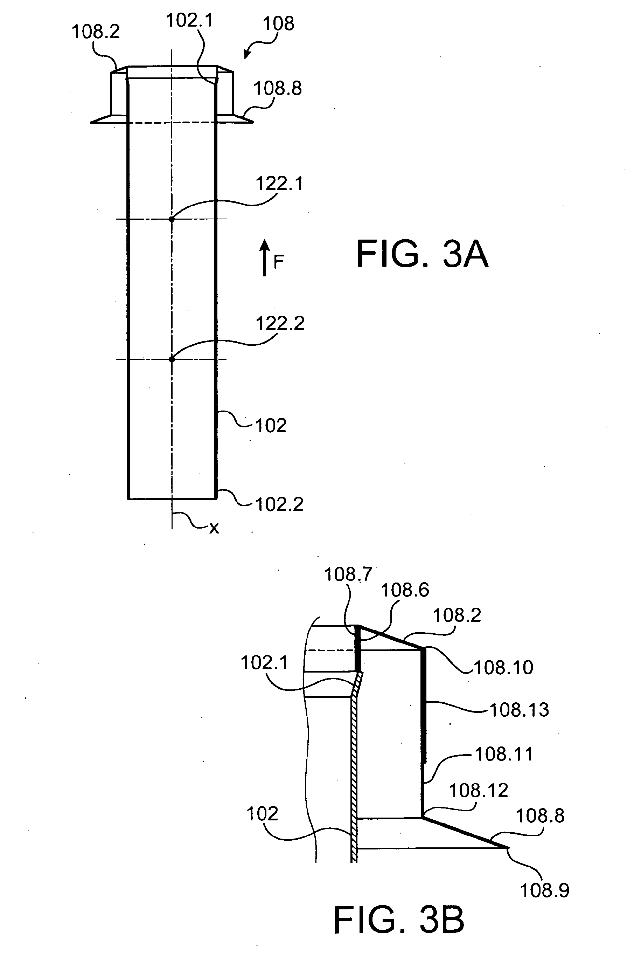

Sur les figures 3A et 3B, on peut voir une représentation schématique d'un connecteur mâle 108.

Le connecteur mâle 108 comporte une première collerette annulaire 108.2 coaxiale à la chemise 102 et raccordée à une première extrémité longitudinale 102.1 de la chemise 102.

De manière avantageuse, un tube 108.6 relie la première collerette 108.2 et la première extrémité longitudinale 102.1 de la chemise 102 par soudage bout à bout. On peut également envisager de fixer la première collerette 108 directement sur la chemise 102.

Le connecteur mâle 108 comporte également une deuxième collerette 108.8 disposée en amont de la première collerette 108.2 et entourant la chemise 102. La deuxième collerette 108.8 est raccordée à un diamètre extérieur 108.10 de la première collerette 108.2 par son diamètre intérieur 108.12. Les deux collerettes sont reliées par une portion tubulaire 108. 11 coaxiale à la chemise 102.

La deuxième collerette 108.8 est raccordée par son diamètre extérieur 108.9 à l'enveloppe extérieure 104. Le connecteur mâle 108 relie l'enveloppe extérieure 104 et la chemise 102 et obture la première extrémité 106 de l'élément 100, confinant le matériau d'isolation thermique.

De manière avantageuse, les collerettes 108.2, 108.8 annulaires sont coniques de conicité orientée selon la flèche F de la deuxième 102.2 vers la première 102.1 extrémité longitudinale de la chemise 102.

De manière également avantageuse, la première extrémité 102.1 de la chemise 102 est évasée par exemple par emboutissage, évitant un décroché mécanique pour la zone de recouvrement avec le connecteur femelle 112.

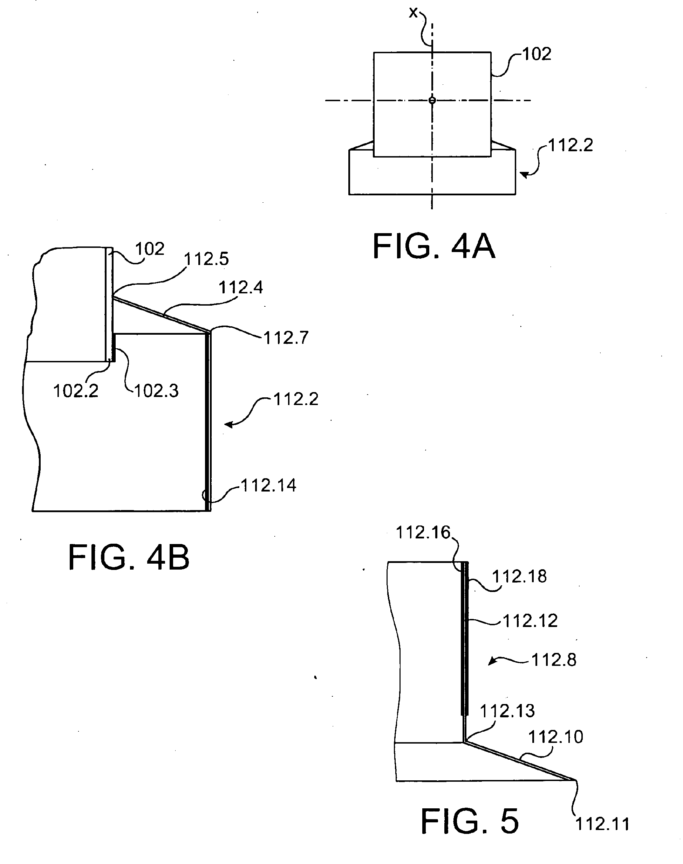

Nous allons maintenant décrire le connecteur femelle 112 sur la base des figures 4A, 4B et 5.

Le connecteur femelle 112 comporte une première partie 112.2 fixée sur la chemise 102 au niveau de sa deuxième extrémité longitudinale 102.2 (figures 4A et 4B).

Cette première partie 112.2 comporte une collerette annulaire 112.4 de diamètre intérieur sensiblement égale au diamètre extérieur de la chemise 102 et fixée à la chemise 102 par son diamètre intérieur 112.5, par exemple par soudage. La première partie 112.2 comporte également une portion tubulaire 112.6 d'axe X, s'étendant à partir d'un diamètre extérieur 112.7 de la collerette 112.4.

Le connecteur femelle 112 comporte également une deuxième partie 112.8 (figure 5) comportant une collerette 112.10 de diamètre extérieur sensiblement égal au diamètre intérieur de l'enveloppe extérieure 104 et fixée sur celle-ci par son diamètre extérieur 112.11, par exemple par soudage.

La deuxième partie 112.8 comporte également une portion tubulaire 112.12 s'étendant de la collerette 112.10 à partir de son diamètre intérieur 112.13.

Le diamètre extérieur de la portion tubulaire 112.12 de la deuxième partie 112.8 est inférieur au diamètre intérieur de la première portion tubulaire 112.6 de la première partie 112.2, de manière à permettre la pénétration de la deuxième partie 112.8 dans la première partie 112.2. Les diamètres intérieur et extérieur des deuxième 112.12 et première 112.6 portions tubulaires respectivement sont tels qu'un jeu fonctionnel est assuré entre les portions tubulaires 112.6, 112.12, pour permettre un coulissement entre les portions tubulaires 112.6, 112.12 tout en assurant un confinement d'un matériau d'isolation thermique.

Ainsi, de manière avantageuse, c'est au niveau du connecteur femelle 112 qu'ont lieu les déplacements occasionnés par les dilatations différentielles au sein d'un élément. En outre, l'assemblage des éléments par pénétration d'un connecteur mâle dans un connecteur femelle permet de supporter la dilatation entre les éléments.

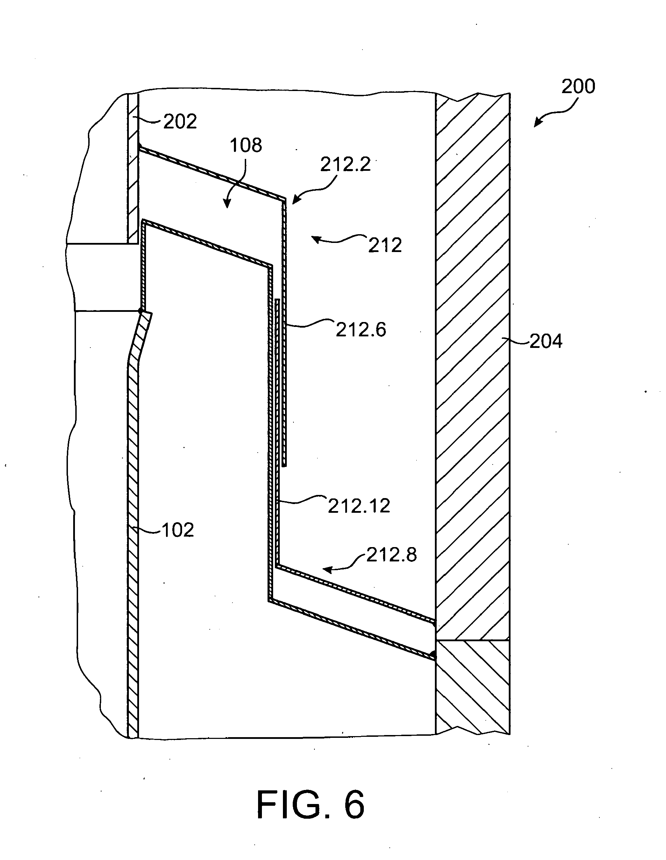

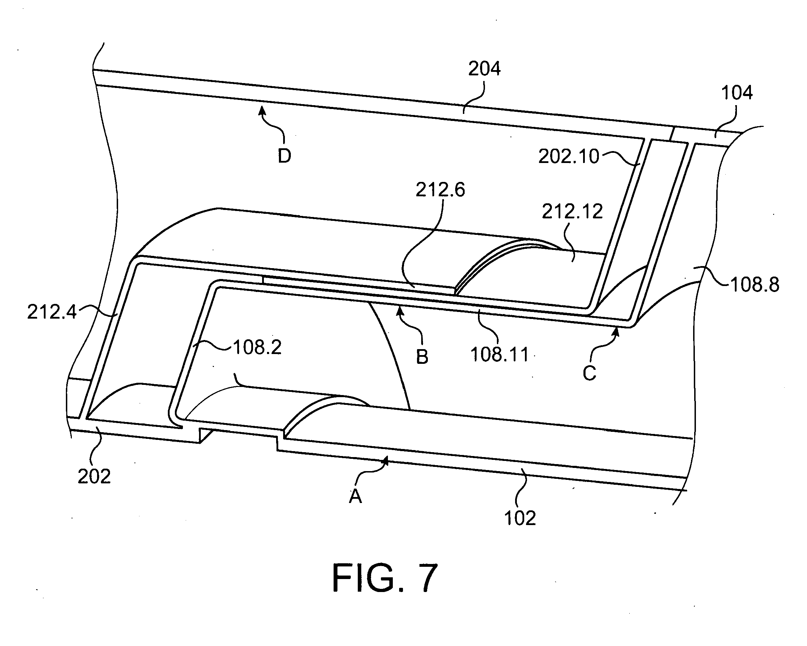

Ainsi, c'est la deuxième partie 112.8, comme on peut le voir sur les figures 6 et 7, qui pénètre dans la première partie 112.2 du connecteur femelle 112.

La fixation des différentes pièces du connecteur femelle sur la chemise 102 et l'enveloppe extérieure 104 s'effectue par exemple par soudage.

Chacun des éléments formant les connecteurs mâle 108 et femelle 112 ainsi que la chemise 102 est, par exemple réalisé en alliage de nickel, par exemple du HR230 ou de l'Inconel 600®, et fixés l'un à l'autre par soudage.

Les éléments peuvent avoir une longueur allant jusqu'à 3 m sans contrainte sur le diamètre de passage du fluide.

De manière avantageuse, les surfaces en contact entre le connecteur mâle 108 et le connecteur femelle 112 sont revêtues d'un matériau limitant les frottements et l'usure.

Sur les figures 3A à 5, les surfaces revêtues sont représentées en trait épais.

Il s'agit notamment de la surface périphérique extérieure 102.3 au niveau de la deuxième extrémité longitudinale 102.2 de la chemise 102, de la surface intérieure 108.7 de la portion tubulaire 108.6 du connecteur mâle 108, ces deux surfaces 102.3, 108.7 étant destinées à venir en contact entre elles. La surface intérieure 112.14 de la première portion tubulaire 112.6 de la première partie 112.2 du connecteur femelle 112, étant destinée à venir en contact avec la surface extérieure 112.18 de la portion tubulaire 112.8 du connecteur femelle 112. Les surfaces intérieure 112.16 et extérieure 112.18 de la portion annulaire 112.12 de la deuxième partie 112.8 du connecteur femelle 112 sont fixées à l'enveloppe extérieure 104. La surface intérieure 112.16 de la portion tubulaire 112.8 du connecteur femelle 112, étant destinée à venir en contact avec la surface extérieure 108.13 de la portion tubulaire 108.11 du connecteur mâle 108.

A titre d'exemple, ces surfaces 102.3, 108.7, 108.13, 112.14, 112.16, 112.18 sont revêtues avec un dépôt limitant les frottements et l'usure, par exemple le dépôt est une couche de cermet Cr₃C₂-NiCr, ou de zircone stabilisée à l'Yttrium.

La chemise 102 comporte avantageusement des trous 122.1, 122.2 réparties le long de la chemise selon l'axe X, et réparties avantageusement dans plusieurs plans orthogonaux à l'axe X. Par exemple, la chemise 102 comporte deux séries 122.1, 122.2 de quatre trous réparties dans deux plans parallèles, situées respectivement à 1/3 et 2/3 de la longueur de la chemise. Ces trous 122.1, 122.2 sont avantageusement répartis régulièrement de manière angulaire. Ces trous 122.1, 122.2 facilitent l'écoulement du gaz en cas de dépressurisation rapide de la conduite.

Entre la chemise 102 et l'enveloppe extérieure 104, est disposé au moins un tube formé de grillage monté de manière concentrique à la chemise.

Dans un exemple de réalisation, deux premiers tubes (non représentés) en grillage grossier de plus grand maillage (maille de 10 mm et diamètre de fil de 2 mm) sont mis en place en quinconce contre la chemise 102. Ces tubes permettent de réaliser un équilibrage en pression de la chemise 102. En effet lors de l'écoulement du fluide, il peut se produire un chargement de la chemise 102 occasionné par les pertes de charges, qu'il est préférable de réduire. D'autre part en situation accidentelle, dans laquelle une dépressurisation rapide de la conduite peut se produire, ces tubes en grillage facilitent l'écoulement du gaz.

De manière avantageuse, ces premiers tubes ne sont pas fixés à la chemise 102 de façon à éviter des surcontraintes dues aux dilatations différentielles. Les tubes en grillages sont ainsi libres et viennent axialement en butée contre le connecteur mâle 108 et le connecteur femelle 112.

Un deuxième tube non représenté ayant un plus petit maillage (maille plate de 0,5 mm et diamètre de fil 0,3 mm) est positionné contre l'isolant. De manière avantageuse ce troisième tube n'est pas fixé au matériau isolant. Ce grillage a pour objectif d'éviter la perte de l'isolant par les trous 122.1, 122.2 de la chemise 102.

Les premiers et deuxièmes tubes en grillage sont réalisés par exemple dans le même matériau que celui utilisé pour réaliser la chemise, par exemple le un alliage de nickel, du type HR230, Inconel 600 ®.

Le matériau d'isolation thermique disposé dans l'élément présente une faible conductivité thermique, avantageusement inférieure à 0,3w/m/°C. Il peut s'agir par exemple d'un feutre ou d'une laine en silicate alcalinoterreux, i.e. SUPERWOOL® 607 ou 612. Un feutre graphite, comme du SIGRATHERM®, est également envisageable, limité cependant aux atmosphères sans oxygène.

Des essais par simulations numériques ont été réalisés, ces essais montrent qu'un faible niveau de contrainte est généré dans l'enveloppe extérieure de la conduite de transport de fluide selon la présente invention. Une faible déformation de la chemise 102 est également observée.

Des essais ont été simulés sur un élément selon la présente invention avec un diamètre intérieur égal à 200 mm, un diamètre extérieur égal à 388 mm et une longueur de l'enveloppe extérieure égale à 1015 mm.

Lors des simulations numériques, l'effet de conduction thermique à l'intérieur de l'isolant est négligé par rapport à l'effet de conduction thermique dans la chemise et les structures métalliques.

Pour simuler les contraintes thermiques appliquées à la conduite, une cartographie thermique de la chemise a été établie. Pour cela, un contact uniforme a été modélisé entre les chemises des différents éléments. La température externe considérée correspond à celle obtenue en considérant une épaisseur d'isolant seule, soit 200°C. La température interne utilisée est celle du fluide, soit 1000°C.

Les éléments utilisés sont des hexaèdres. Les mailles ont une taille d'environ 1 mm × 2 mm × 0,6 mm. Le comportement de la structure est supposé être axisymétrique.

Sur la figure 7, est représentée une connexion entre deux éléments selon la présente invention, sur laquelle la température obtenue par la simulation numérique des différentes zones est indiquée. La température de la zone A est imposée ainsi que les conditions d'échanges extérieures par convection naturelle en air de la structure, elles sont respectivement de 1000°C et 20°C. La zone B est à une température de 700°C, la zone C est à une température de 450°C et la zone D est à une température de 200°C.

Pour les contraintes mécaniques, des éléments contacts permettant le glissement et la non pénétration entre les deux surfaces en frottement ont été modélisés.

Comme données d'entrée du calcul mécanique, on utilise les résultats de la simulation thermique pour imposer les températures de chaque noeud comme chargement, pour calculer les dilatations de la chemise. Une pression de 100 bars est appliquée sur la partie interne de l'enveloppe extérieure. On considère que l'extrémité longitudinale de la conduite est immobilisée suivant l'axe X.

On peut observer que la simulation montre un glissement des chemises des différents éléments.

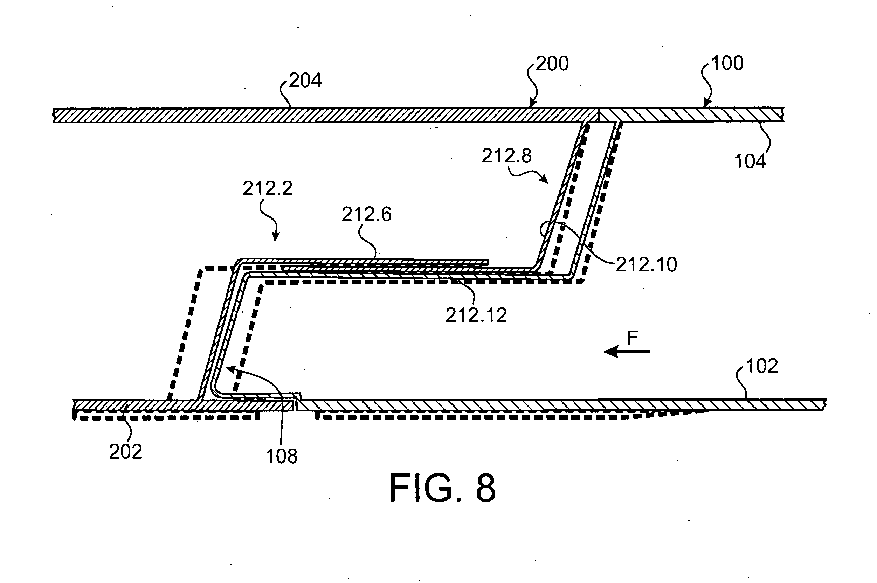

Sur la figure 8, est représentée la déformation simulée de la conduite selon la présente invention dans les conditions énoncées ci-dessus.

Les éléments en traits interrompus représentent la deuxième partie du connecteur femelle et la deuxième collerette du connecteur mâle dans une position non sollicitée.

On peut observer une déformation de la collerette 212.10 de la deuxième partie 212.8 du connecteur femelle 212 de l'élément aval 200 dans le sens de la flèche F, la portion tubulaire 212.12 de la deuxième partie 212.8 a coulissé par rapport à la portion tubulaire 212.6 de la première partie 212.2.

On observe également une déformation dans le sens de la flèche F de la collerette annulaire extérieure 108.8 du connecteur mâle 108 de l'élément amont 100. Le connecteur mâle 108 de l'élément amont 100 a alors coulissé par rapport au connecteur femelle 212 de l'élément aval 200. La déformation du connecteur mâle 108 est dans le sens de la flèche F et la déformation du connecteur femelle 212 a lieu dans le sens opposé à la flèche F.

On peut alors observer que le glissement des chemises permet de limiter grandement les contraintes mécaniques d'origines thermiques dues aux dilatations, et les contraintes mécaniques apparaissant alors dans la structure métallique sont acceptables, puisqu'il est mesuré un contrainte de 135 MPa à 500°C, alors que la limite prévue par les codes de dimensionnement est de 150 MPa environ.

Nous allons maintenant décrire le procédé de fabrication d'un élément selon la présente invention.

Le procédé de fabrication d'un élément selon la présente invention comporte les étapes :
a) de fabrication d'un sous ensemble comportant la chemise 102, le connecteur mâle 108, et la première partie 112.2 du connecteur femelle 112 et de fabrication de la deuxième partie 112.8 du connecteur femelle 112,
b) mise en place des tubes grillagés sur la chemise 102 du sous ensemble 102, 108 et 112.2,
c) de fixation du sous ensemble 102, 108 et 112.2 à l'enveloppe extérieure 104,
d) de mise en place du matériau d'isolation thermique entre l'enveloppe extérieure et la chemise,
e) de fixation de la deuxième partie 112.8 du connecteur femelle sur l'enveloppe extérieure 104.

Nous allons maintenant détailler les étapes du procédé de fabrication d'un élément selon l'invention.

La réalisation de l'élément selon la présente invention se fait de préférence par chaudronnerie.

Lors de l'étape a), la chemise 102 est fabriquée de préférence à partir d'un tube. On peut également envisager de rouler et souder une feuille de tôle.

Ensuite les trous 122.1, 122.2 sont réalisés dans la chemise aux emplacements déterminés.

Les différentes pièces du connecteur mâle sont réalisées par formage, puis soudées entre elles

Le connecteur mâle est fixé sur la chemise par soudage.

De manière avantageuse, les parties du connecteur mâle destinées à venir en contact avec le connecteur femelle sont revêtues, comme cela a été décrit précédemment en relation avec les figures 3A à 5.

Le procédé selon l'invention comporte également une étape de mise en place de tubes en grillages, libres axialement.

La fabrication du connecteur femelle s'effectue par formage des pièces des première et deuxième parties et par soudage de chacune de ces pièces pour former les première et deuxième parties.

De manière avantageuse, une étape de revêtement de certaines surfaces est prévue, tel que cela est décrit ci-dessus.

La première partie du connecteur est fixée sur la chemise 102 au niveau de sa deuxième extrémité longitudinale 102.2.

La première partie du connecteur femelle 112 est fixée par soudage sur la chemise 102.

Lors de l'étape c), le connecteur mâle est ensuite assemblé par soudage avec l'enveloppe extérieure. On obtient alors un logement annulaire s'étendant selon l'axe X et ouvert à une de ses extrémités longitudinales.

A l'étape d), le matériau d'isolation thermique est ensuite mis en place entre la chemise et l'enveloppe extérieure.

A l'étape e), la deuxième partie est fixée sur la face intérieure de l'enveloppe extérieure 104 par soudage.

Le procédé de fabrication de la conduite selon la présente invention comporte les étapes :
f) d'insertion d'un connecteur mâle d'un premier élément dans un connecteur femelle d'un deuxième élément,
g) de solidarisation des deux éléments par bridage ou soudage,
h) de répétition des étapes f) et g) jusqu'à obtenir une conduite de dimension désirée.

Lors de l'étape f), le connecteur mâle 108 du premier élément pénètre dans le connecteur femelle 212 du deuxième élément, la première portion tubulaire coulisse autour de la deuxième extrémité longitudinale 102.2 de la chemise, la deuxième portion tubulaire coulisse dans la deuxième partie du connecteur femelle.

De manière avantageuse, le jeux de montage axial entre le connecteur mâle et le connecteur femelle est de 0,5 mm à 1 mm au diamètre suivant le diamètre de la conduite.

Selon la présente invention, le procédé de réalisation de conduite de transport de fluide, en particulier de gaz chauds est simple. La réalisation s'effectue par emboîtement et bridage et/ou soudage, aucune pièce rapportée hormis les moyens de bridage le cas échéant, ne sont rapportés. De plus le matériau d'isolation thermique est confiné et donc il ne gêne pas la réalisation de la conduite.

## Revendications

1. Elément de conduite de transport de gaz à haute température comportant un élément d'isolation thermique de révolution comportant une enveloppe, non scellée d'axe longitudinal (X), au moins un isolant thermique de type fibreux disposé dans ladite enveloppe, ledit isolant thermique étant encapsulé dans l'enveloppe, l'enveloppe étant formée par une enveloppe extérieure (104) du conduit de transport de fluide et une chemise (102) destinée à être en contact avec le fluide à transporter et comportant à une première extrémité longitudinale (106) un connecteur mâle (108) et à une deuxième extrémité longitudinale (110) opposée à la première extrémité longitudinale (116) un connecteur femelle (112), l'enveloppe extérieure (104) et la chemise (102) étant raccordées par les connecteurs mâle (108) et femelle (112), ladite enveloppe comportant une zone annulaire adaptable axialement, ladite zone adaptable étant située dans le connecteur femelle (112), ledit connecteur femelle comportant une première partie (112.2) fixée sur la chemise (102) et une deuxième partie (112.8) fixée sur l'enveloppe extérieure (104), ladite deuxième partie pénétrant dans la première partie, la première et la deuxième partie comportant une première (112.6) et une deuxième (112.12) surface cylindrique respectivement, lesdites première (112.6) et une deuxième surfaces (112.12) cylindriques se chevauchant et étant aptes à coulisser l'une par rapport à l'autre en cas de dilatations dudit élément d'isolation de tuyauterie, tout en assurant le confinement de l'isolant thermique, de sorte à former ladite zone adaptable.

2. Elément de conduite selon la revendication 1, dans lequel le connecteur mâle (108) comporte une première (108.2) et une deuxième (108.8) collerettes annulaires raccordées par une portion tubulaire (108.11), ladite première collerette étant fixée à une première extrémité longitudinale (102.1) de la chemise (102) par l'intermédiaire d'une portion tubulaire (108.6), et ladite deuxième collerette étant fixée à une première extrémité longitudinale de l'enveloppe extérieure (104)

3. Elément de conduite selon la revendication 2, dans lequel la première partie (112.2) comporte une collerette annulaire (112.4) raccordée par son diamètre intérieur (112.5) à la chemise (102) au niveau d'une deuxième extrémité longitudinale (102.2) de ladite chemise (102) et à une première portion tubulaire (112.6) par son diamètre extérieur (112.7), ladite première portion tubulaire (112.6) formant la première surface (112.14), dans lequel la deuxième partie (112.8) comporte une collerette annulaire (112.10) raccordée par son diamètre extérieur (112.11) à une deuxième extrémité longitudinale de l'enveloppe extérieure (104) et à une deuxième portion tubulaire (112.12) par son diamètre intérieur (112.13), ladite deuxième portion tubulaire (112.12) formant la deuxième surface (112.18), lesdites première (112.2) et deuxième (112.8) parties étant montées de manière à ce que les première (112.6) et deuxième (112.12) portions tubulaires se recouvrent au moins partiellement et puissent coulisser l'une par rapport à l'autre.

4. Elément de conduite selon la revendication précédente, dans lequel la deuxième portion tubulaire (112.12) de la deuxième partie (112.8) du connecteur femelle (112) pénètre dans la première portion tubulaire (112.6) de la première partie (112.2) du connecteur femelle (112).

5. Elément de conduite selon la revendication 3 ou 4, dans lequel la collerette (112.4) de la première partie (112.2) du connecteur femelle (112) est fixée sur la paroi périphérique de la chemise (102) en arrière de la deuxième extrémité longitudinale (102.2) de la chemise (102).

6. Elément de conduite selon l'une des revendications 3 à 5, dans lequel la première extrémité longitudinale (102.1) de la chemise (102) a une forme évasée.

7. Elément de conduite selon l'une des revendications 3 à 6, dans lequel les collerettes (108.2, 112.4, 112.10) comportent une conicité orientée de la deuxième (102.2) vers la première (102.1) extrémité longitudinale de la chemise (102).

8. Elément de conduite selon l'une des revendications 2 à 7, dans lequel le connecteur mâle (108) est fixé par soudage sur l'enveloppe extérieure (104) et la chemise (102), et les première (112.2) et deuxième (112.8) parties du connecteur femelle (112) sont fixées par soudage sur la chemise (102) et l'enveloppe extérieure (104) respectivement.

9. Elément de conduite selon l'une des revendications 2 à 8, dans lequel les connecteurs mâle (108) et femelle (112) sont recouverts au moins partiellement d'un revêtement (102.3, 112.14, 112.16, 112.18, 208.7, 108.13) apte à réduire les frottements et l'usure entre le connecteur mâle (108) et le connecteur femelle (212), et entre la première partie du connecteur femelle (212.2) et la deuxième partie du connecteur femelle (212.8) type cermet Cr₃C₂-NiCr, ou zircone stabilisée à l'yttrium.

10. Elément de conduite selon l'une quelconque des revendications précédentes comportant des moyens de fixation ((120, 121, 123, 114, 116, 118) à un autre élément d'isolation thermique selon l'une quelconque des revendications précédentes, par bridage ou par soudage.

11. Elément de conduite selon l'une quelconque des revendications 1 à 10, réalisé avec un alliage de nickel, type HR230 ou Inconel 600.

12. Elément de conduite selon l'une quelconque des revendications 1 à 11, dans lequel l'isolant thermique a une conductivité thermique inférieure à 0,3.

13. Elément de conduite selon l'une quelconque des revendications 1 à 12, dans lequel l'isolant thermique comporte un feutre et/ou une laine en silicate alcalino-terreux, et/ou un feutre graphite et au moins un tube en grillage.

14. Elément de conduite selon la revendication 13, dans lequel l'isolant thermique comporte des premiers tubes en grillage de plus grand maillage et un deuxième tube en grillage de plus petit maillage.

15. Elément de conduite selon la revendication précédente, dans lequel les premiers tubes en grillages sont libres axialement et dont le déplacement axial est limité par le connecteur mâle (108) et le connecteur femelle (112).

16. Elément de conduite selon la revendication 14 ou 15, dans lequel les premiers tubes ont des mailles de 10 mm de côté réalisé avec un fil de 2 mm de diamètre et le deuxième tube a des mailles de 0,5 mm de côté réalisées avec un fil de 0,3 mm de diamètre.

17. Conduit de transport de fluide comportant une succession d'éléments (100, 200) de conduite selon l'une quelconque des revendications précédentes.

18. Procédé de fabrication d'un élément de conduite selon l'une quelconque des revendications 1 à 17 en combinaison avec la revendication 14, comportant les étapes :
a) de fabrication d'un premier sous-ensemble comportant la chemise (102), le connecteur mâle (108) et la première partie (112.2) du connecteur femelle (112) et de fabrication de la deuxième partie (112.8) du connecteur femelle (112),
b) de mise en place des tubes grillagés sur la chemise (102) du sous ensemble 102, 108 et 112.2,
c) de fixation dudit premier sous-ensemble (102, 108, 112.2) sur l'enveloppe extérieure (104),
d) de mise en place d'un matériau d'isolation thermique entre la chemise (102) et l'enveloppe extérieure (104),
e) de fixation de la deuxième partie (112.8) du connecteur femelle (112) sur l'enveloppe extérieure (104).

19. Procédé selon la revendication précédente, dans lequel lors de l'étape a), le sous-ensemble (102, 108, 112.2) et la deuxième partie (112.8) du connecteur femelle (112) sont réalisés par formage et soudage.

20. Procédé selon la revendication 18 ou 19, dans lequel lors de l'étape b), des tubes en grillage sont mis en place entre la chemise (102) et l'enveloppe extérieure (104) et sont libres axialement.

21. Procédé de fabrication d'une conduite à l'aide des éléments de conduite selon l'une des revendications 1 à 17 comportant :
f) l'étape d'insertion d'un connecteur mâle (108) d'un élément (100) dans un connecteur femelle (212) d'un autre élément (200),
g) de solidarisation des deux éléments (100, 200) par bridage ou soudage,
h) de répétition des étapes f) et g) jusqu'à atteindre la longueur de conduite désirée.

## Claims

1. Revolution thermal insulation element for a pipe for transporting gases at high temperature comprising an non closed envelope of longitudinal axis (X), at least one fibrous type thermal insulation arranged in said envelope, said thermal insulation being encapsulated in the envelope, the envelope being formed by an outer envelope (104) of the fluid transport pipe and a jacket (102) intended to be in contact with the fluid to be transported and comprising at a first longitudinal end (106), a male connector (108) and at a second longitudinal end (110) opposite to the first longitudinal end (116) a female connector (112), the outer envelope (104) and the jacket (102) being connected by the male (108) and female (112) connectors, said envelope comprising an axially adaptable annular zone, said adaptable zone being situated in the female connector (112), said female connector comprising a first part (112.2) which is fixed on the jacket (102) and a second part (112.8) which is fixed on the outer envelope (104) said second part penetrating in the first part, the first and second parts comprising a a first (12.6) and a second (112.12) cylindrical surfaces respectively, said first (112.6) and second surfaces overlaping and being able to slide against each other in the case of expansions of said pipe insulation element and simultaneously encapsulating the thermal insulation so as to form said adaptable zone.

2. Thermal insulation element according to claim 1, in which the male connector (108) comprises a first (108.2) and a second (108.8) annular flange connected by a tubular portion (108.11), said first flange being fixed to a first longitudinal end (102.1) of the jacket (102) by means of a tubular portion (108.6), and said second flange being fixed to a first longitudinal end of the outer envelope (104).

3. Thermal insulation element according to claim 2, in which the first part (112.2) comprises an annular flange (112.4) connected by its inner diameter (112.5) to the jacket (102) at the level of a second longitudinal end (102.2) of said jacket (102) and to a first tubular portion (112.6) by its outer diameter (112.7), said first tubular portion (112.6) forming the first surface (112.14), in which the second part (112.8) comprises an annular flange (112.10) connected by its outer diameter (112.11) to a second longitudinal end of the outer envelope (104) and two a second tubular portion (112.12) by its inner diameter (112.13), said second tubular portion (112.12) forming the second surface (112.18), said first (112.2) and second (112.8) parts being assembled so that the first (112.6) and second (112.12) tubular portions overlay at least partially and can slide against each other.

4. Thermal insulation element according to the previous claim, in which the second tubular portion (112.12) of the second part (112.8) of the female connector (112) penetrates into the first tubular portion (112.6) of the first part (112.2) of the female connector (112).

5. Thermal insulation element according to claim 3 or 4, in which the flange (112.4) of the first part (112.2) of the female connector (112) is fixed to the peripheral wall of the jacket (102) behind the second longitudinal end (102.2) of the jacket (102).

6. Element according to one of claims 3 to 5, in which the first longitudinal end (102.1) of the jacket (102) has a splayed shape.

7. Thermal insulation element according to one of claims 3 to 6, in which the flanges (108.2, 112.4, 112.10) comprise a conic shape oriented from the second (102.2) towards the first (102.1) longitudinal end of the jacket (102).

8. Thermal insulation element according to one of claims 2 to 7, in which the male connector (108) is fixed by welding on the outer envelope (104) and the jacket (102), and the first (112.2) and second (112.8) parts of the female connector (112) are fixed by welding on the jacket (102) and the outer envelope (104) respectively.

9. Thermal insulation element according to one of claims 2 to 8, in which the male (108) and female (112) connectors are coated at least partially with a coating (102.3, 112.14, 112.16, 112.18, 108.7, 108.13) capable of reducing friction and wear between the male connector (108) and the female connector (212), and between the first part of the female connector (212.2) and the second part of the female connector (212.8) of the cermet Cr₃C₂-NiCr or yttrium stabilised zirconia type.

10. Thermal insulation element according to any of the previous claims comprising means of fixation ((120, 121, 123, 114, 116, 118) to another thermal insulation element according to any of the previous claims, by flanking or by welding.

11. Thermal insulation element according to any of claims 1 to 10, fabricated with a HR230 or Inconel 600 type nickel alloy.

12. Thermal insulation element according to any of claims 1 to 11, in which the thermal insulation has a thermal conductivity less than 0.3.

13. Thermal insulation element according to any of claims 1 to 12, in which the thermal insulation comprises an alkaline earth silicate felt and/or wool, and/or a graphite felt and at least one screened tube.

14. Thermal insulation element according to claim 13, in which the thermal insulation comprises first tubes of larger mesh size screen and a second tube of smaller mesh size screen.

15. Thermal insulation element according to the previous claim, in which the first screened tubes are axially free and in which the axial movement is limited by the male connector (108) and the female connector (112).

16. Thermal insulation element according to claim 14 or 15, in which the first tubes have meshes of 10 mm sides formed with a wire of 2 mm diameter and the second tube has meshes of 0.5 mm sides formed with a wire of 0.3 mm diameter.

17. Fluid transport pipe comprising a succession of thermal insulation elements (100, 200) according to any of the previous claims.

18. Method for fabricating a pipe element according to any of claims 1 to 17 in combination with claim 14, comprising the steps:
a) fabricating a first sub-assembiy comprising the jacket (102), the male connector (108) and the first part (112.2) of the female connector (112) and fabricating the second part (112.8) of the female connector (112),
b) mounting screened tubes on the jacket (102) of the sub-assembly (102, 108, 112.2),
c) fixing said first sub-assembly (102, 108, 112.2) on the outer envelope (104),
d) mounting a thermal insulation material between the jacket (102) and the outer envelope (104),
e) of fixing the second part (112.8) of the female connector (112) on the outer envelope (104).

19. Method according to the previous claim, in which, during step a), the sub-assembly (102, 108, 112.2) and the second part (112.8) of the female connector (112) are fabricated by forming and welding.

20. Method according to claim 18 or 19, in which, during step b), screened tubes are mounted between the jacket (102) and the outer envelope (104) and are axially free to move.

21. Method for fabricating a pipe by means of pipe elements according to one of claims 1 to 17 comprising:
f) the step of inserting a male connector (108) of one element (100) into a female connector (212) of another element (200),
g) securing the two elements (100, 200) by flanging or welding,
h) repeating steps f) and g) until the desired length of pipe is attained.

## Patentansprüche

1. Element für eine Leitung zum Transport von Gas bei hoher Temperatur, umfassend ein Wärmeisolations- Element mit einer nicht versiegelten Umfüllung mit Längsachse (X), mit wenigstens einer in der Umhüllung angeordneten Wärmeisolation von Fasertyp, wobei die genannte Wärmeisolation in der Umhüllung gekapselt ist, die Umhüllung von einer äußeren Hülle (104) der Strömungsmittel-Transportleitung und von einem zum Kontakt mit dem zu transportierenden Strömungsmittel bestimmten Mantel (102) gebildet wird und an einem ersten Längsende (106) ein männliches Stecker (108) und an einem dem ersten Längsende entgegengesetzten zweiten Längsende (110) ein weibliches Stecker (112) aufweist, wobei die äußere Umhüllung (104) und der Mantel (102) durch die männlichen und weiblichern Stecker verbunden sind, und wobei die Umhüllung eine axial anpaßbare ringförmige Zone umfaßt, welche in dem weiblichen Stecker (112) gelegen ist, welcher einen auf dem Mantel (102) fixierten ersten Teil (112.2) und einen auf der äüßeren Hülle (104) fixierten zweiten Teil (112.8) umfaßt, von welchen der zweite Teil in den ersten Teil eindringt, und wobei der erste und der zweite Teil jeweils eine erste (112.6) und eine zweite (112..12) zylindrische Fläche aufweisen und die genannten ersten (112.6) und zweiten (112.12) Zylinderflächen sich überlappen und im Falle von Ausdehnungen des genannten Isolationselements der Leitungen relativ zueinander zu gleiten vermögen, bei gleichzeitiger Gewährleistung der Einschließung der Wärmeisolation, derart daß die genannte anpaßbare Zone gebildet wird.

2. Leitungselement nach Anspruch 1, in welchem der männliche Stecker (108) jeweils einen ersten (108.2) und einen zweiten (108.8) ringförmigen Kragen aufweist, die durch ein rohrförmiges Teil (108.11) verbunden sind, wobei der genannte erste Kragen auf einem ersten Längsende (102.1) des Mantels (192) vermittels eines rohrförmigen Teils (106.6) fixiert ist und der genannte zweite Kragen auf einem ersten Längsende der äußeren Hülle (104) fixiert ist.

3. Leitungselement nach Anspruch 2, bei welchem der erste Teil (112.2) einen ringförmigen Kragen (112,4) aufweist, der mit seinen Innendurchmesser (112.5) mit dem Mantel (102) auf dem Niveau eines zweiten Längsendes (102.2) des Mantels (102) verbunden ist und durch seinen Außendurchmesser (112.7) mit einem ersten rohrförmigen Teil (112.6) verbunden ist, wobei der genannte erste rohrförmige Teil die erste Oberfläche (112.14) bildet, bei welchem des weiteren der zweite Teil (112.8) einen ringförmigen Kragen (112.10) aufweist, der durch seinen Außendurchmesser (112.11) mit einem zweiten Längsende der Außenhülle (104) verbunden ist und durch seinen Innendurchmesser (112.13) mit einem zweiten rohrförmigen Teil (112.12) verbunden ist, wobei der zweite rohrförmige Teil (112.12) die zweite Oberfläche (112.18) bildet, und wobei die genannten ersten (112.2) und zweiten (112.8) Teile so montiert sind, daß die genannten ersten (112.6) und zweiten (112.12) rohrförmigen Teile sich wenigstens teilweise überlappen und relativ zueinander gleitbar sind.

4. Leitungselement nach dem vorhergehenden Anspruch, bei welchem der zweite rohrförmige Bereich (112.12) des zweiten Teils (112.8) des weiblichen Steckers (112) in den ersten rohrförmigen Bereich (112.6) des ersten Teils (112.2) des weiblichen Steckers (112) eindringt.

5. Leitungselement nach Anspruch 3 oder 4, bei welchem der Kragen (112.4) des ersten Teils (112.2) des weiblichen Steckers (112) auf der Umfangswandung des Mantels (102) hinter dem zweiten zweiten Längsende (102.2) des Mantels (102) fixiert ist.

6. Leitungselement nach einem der Ansprüche 3 bis 5, bei welchem das erste Längsende (102.1) des Mantels (102) eine bauchig-glockige Form besitzt.

7. Leitungselement nach einem der Ansprüche 3 bis 6, bei welchem die Kragen (108.1, 112.4, 112.10) eine Konizität in Richtung vom zweiten (102.2) zum ersten (102.1) Längsende des Mantels (102) aufweist.

8. Leitungselement nach einem der Ansprüche 2 bis 7, bei welchem das männliche Stecker (108) auf der Außenhülle (104) und auf dem Mantel (102) durch Schweißung fixiert ist und das erste (112.2) und zweite (112,8) Teil des weiblichen Steckers (112) an dem Mantel (102) und an der Außenhülle (104) mittels Schweissen fixiert sind.

9. Leitungselement nach einem der Ansprüche 2 bis 8, bei welchem die männlichen (108) und weiblichen (112) Stecker wenigstens teilweise mit einem Überzug (102.3, 112.14, 112.16, 112.18, 108.7, 108,13) versehen sind, der die Reibungen und den Verschleiß zwischen dem männlichen Stecker (108) und dem weiblichen Stecker (212) sowie zwischen dem ersten Teil des weiblichen Steckers (212.2) und dem zweiten Teil des weiblichen Steckers (212.8) zu verringern vernag, vom Typ Cermet Cr₃ C₂ - NiCr, oder mit Yttrium stabilisiertes Zirkon.

10. Leitungselement nach einem beliebigen der vorhergehenden Ansprüche, welches Mittel (120, 121, 123, 114, 116, 118) zur Befestigung, mittels Heftung oder Schweißung, an einem anderenWärmeisolations-Element gemäß einem beliebigen der vorhergehenden Ansprüche aufweist.

11. Leitungselement nach einem beliebigen der Ansprüche 1 bis 10, in Ausführung mit einer Nickel-Legierung vom Typ HR 230 oder Inconel 600.

12. Leitungselement nach einem beliebigen der Ansprüche 1 bis 11, bei welchem die Wärmeisolation eine Wärmeleitfähigkeit von weniger als 0,3 aufweist.

13. Leitungselement nach einem beliebigen der Ansprüche 1 bis 12, bei welchem die Wärmeisolation einen Filz und oder eine Wolle aus Erdalkali-Silikat, und/oder einen Graphit-Filz sowie wenigstens ein Gitterrohr umfaßt.

14. Leitungselement nach Anspruch 13, bei welchem die Wärmeisolation erste Rohre aus Gitterwerk größerer Maschenweite und ein zweites Rohr aus Gitterwerk kleinerer Maschenweite umfaßt.

15. Leitungselement nach dem vorhergehenden Anspruch, bei welchem die ersten Gitterrohre axial frei sind und ihre axiale Verschieblichkeit durch das männliche Stecker (108) und das weibliche Stecker (112) begrenzt ist.

16. Leitungsrohr nach Anspruch 14 oder 15, bei welchem die ersten Rohre Maschen von 10 mm Seitenlänge aufweisen und aus Draht von 1mm Durchmesser hergestellt sind, und das zweite Rohr Maschen von 0,5 mm Seitenlänge aufweist und aus einem Draht von 0,3 mm Durchmesser hergestellt sind.

17. Leitung für den Transport von Strrömungsmitteln, bestehend aus einer Aufeinanderfolge von Leitungs-Elementen (100, 200) gemäß einem beliebigen der vorhergehenden Ansprüche.

18. Verfahren zur Herstellung eines Leitungselements nach einem beliebigen der Ansprüche 1 bis 17, in Kombination mit dem Anspruch 14, das Verfahren umfassend die Schritte :
a) Herstellen eines ersten Subaggregats umfassend den Mantel (102), das männliche Stecker (108) und das erste Teil (112.2) des weiblichen Steckers (112) sowie Herstellen des zweiten Teils (112.8) des weiblichen Steckers (112),
b) Anbringen der Gitterrohre auf dem Mantel (102) des Subaggregats (102, 108, und 112.2),
c) Fixieren des ersten Subaggregats (102, 108, 112.2) auf der Außenhülle (104),
d) Einbringen eines Wärmeisolations-Materials zwischen dem Mantel (102) und der Außenhülle (104),
e) Fixieren des zweiten Teils (112,8) des weiblichen Steckers (112) auf der Außenhülle (104).

19. Verfahren nach dem vorhergehenden Anspruch, bei welchem während der Verfahrensstufe a) das Subaggregat (102, 108, 112.2) und der zweite Teil (112.8) des weiblichen Steckers (112) mittels Formgebung und Schweissen hergestellt werden.

20. Verfahren nach Anspruch 18 oder 19, bei weichem während der Verfahrensstufe b) Gitterrohre zwischen dem Mantel (102) und der Außenhülle (104) axial frei eingebracht werden.

21. Verfahren zur Herstellung einer Leitung mithilfe der Leitungselemente nach einem der Ansprüche 1 bis 17, das Verfahren umfassend :
f) Verfahrensstufe des Einsetzens eines männlichen Steckers (108) eines Elements (100) in ein weibliches Stecker (212) eines anderen Elements (200),
g) Verbinden der beiden Elemente (100, 200) mittels Flanschverbindung oder Schweißung,
h) Wiederholen der Schritte f) und g) bis zum Erreichen der gewünschten Leitungslänge.
